# EUROPEAN PATENT APPLICATION

(11) **EP 4 778 893 A1**
(43) Date of publication of application: **22.07.2026**
(21) Application number: 25382019.5
(22) Date of filing: 15.01.2025
(51) Int. Cl.: C02F 9/00, B22F 1/16, B82Y 40/00, C05F 5/00, C10L 9/08, C02F 11/04, C02F 11/122, C02F 11/125, C02F 11/127, C02F 11/18, C02F 103/32, F26B 3/12, F26B 3/28

(54) **PROCESS FOR THE MANAGEMENT AND VALORISATION OF ZERO-WASTE AGRO-INDUSTRIAL OLIVE OIL WASTE AND/OR BY-PRODUCTS WITHIN THE FRAMEWORK OF THE CIRCULAR BIOECONOMY**

(71) Applicant: Smallops, S.L., 06400 Don Benito Badajoz (ES)
(72) Inventor: ESCUDERO MIRA, RUBEN, Elche (Alicante) (ES)
(74) Representative: Fernández-Pacheco, Aurelio Fernández

(57) **Abstract**

Process for the management and valorisation of zero-waste agro-industrial olive oil waste, within the framework of the circular bioeconomy. The process is divided into two main stages 1.-Phase prior to the anaerobic digester which consists of the following stages -Reception and storage of the alperujo (olive pomace) -Separation of pulp and stone -Horizontal 3-phase centrifugation - Hydrothermal carbonisation of the acidic aqueous effluent and 2.- Anaerobic digestion phase obtaining products including -Biomass (stone, pulp, pomace and olive marc/pomace) -Olive pomace oil -Metallic hydrochar and/or metallic biochar with carbon-encapsulated iron nanoparticles -Nutrient-rich liquid -Gases composed mainly of CO2 -Green energy in the form of biogas and/or biomethane -Digestate for use as organic amendment or fertiliser feedstock. This innovative process allows the full valorisation of olive residues, contributing to sustainability and efficiency in the olive oil industry.

## Description

The present invention relates to a process that consists of a system for the management and valorisation of zero-waste agro-industrial olive oil residues and/or by-products that makes it possible to obtain at least the following products:
1. biomass in the form of olive stones, pulp, pomace and marc;
2. olive pomace oil;
3) metallic hydrochar and/or metal biochar in suspension, containing carbon-encapsulated iron nanoparticles (CEINs), which present part of the carbon in the form of graphite layers and the iron in different oxidation states, mainly reduced, so that it presents both Fe3+, Fe2+ and Fe0;
4) carbon-encapsulated iron nanoparticles (CEINs), which present part of the carbon in the form of graphite layers and the iron in different oxidation states, mainly reduced, so that it presents both Fe3+, Fe2+ and Fe0;
(5) Nutrient-rich liquid consisting of CEINs-free metallic hydrochar which can be used in the agricultural industry or for biogas production;
6) gases consisting mainly of CO2 that can be used as raw materials in the chemical and pharmaceutical industries, in greenhouses (CO2 only) or for biogas production;
7) green energy in the form of biogas, biomethane and/or biohydrogen;
(8) digestate that can be used as an organic amendment and/or raw material for the manufacture of fertilisers and agronomic products such as compost and biostimulants, among others;

This process comprises two major stages which are made up of several procedures:

### I. Anaerobic digester pre-phase

1) reception and storage of the alerujo (two-phase olive mill wastewater) in a pond and/or impermeable tank;
2) introduction of the alperujo into an auger-type pulp-stone separator:
3) horizontal 3-phase centrifugation (3-phase decanter) of the stoned alperujo, obtaining: olive pomace oil, pomace and acidic aqueous effluent rich in organic compounds;
4) hydrothermal carbonisation of the acidic aqueous effluent rich in organic compounds with the addition of dissolved iron, obtaining:
   a. suspended metallic hydrochar and/or biochar, containing carbon-encapsulated iron nanoparticles (CEINs), which present part of the carbon in the form of graphite layers and the iron in different oxidation states, mainly reduced, so that it presents both Fe3+, Fe2+ and Fe0;
   b. carbon-encapsulated iron nanoparticles (CEINs), which present part of the carbon in the form of graphite layers and the iron in different oxidation states, mainly reduced, so that it presents both Fe3+, Fe2+ and Fe0;
   c. nutrient-rich liquid consisting of CEINs-free metallic hydrochar that can be used in the agricultural industry or for biogas production;
   d. gases consisting mainly of CO2 which can be used as raw materials in the chemical and pharmaceutical industries, in greenhouses (CO2 only) or for biogas production;

### II. Anaerobic digestion, obtaining:

(1) green energy in the form of biogas and/or biomethane, with a methane production yield of between 200 and 600 m3 normal methane per tonne of volatile solids;
(2) digestate that can be used as an organic amendment and/or raw material for the manufacture of fertilisers and agronomic products such as compost and biostimulants, among others;

### BACKGROUND TO THE INVENTION

### A. Olive oil residues and by-products. As defined by the Spanish Renewable

Energy Association (APPA), agricultural residues and by-products are those that come from the remains of woody and/or herbaceous crops (such as vineyards, cereals, etc.) and from cleaning and maintenance carried out in the countryside to prevent pests or fires. Moreover, this type of biomass is generally solid.

On the other hand, the APPA indicates that, agro-industrial wastes and by-products are a type of biomass generated during the processing of agricultural materials (plants, fruits, vegetables, cereals, etc.) at industrial facilities in the agricultural sector, such as olive oil production, olive production, seed oil extraction, the wine and alcohol industry, canning, brewing, nut production, rice production, and
seaweed processing. Either from industrial installations in the forestry sector: first and second transformation forestry industries (furniture, doors, carpentry, etc.), or from the recovery of lignocellulosic materials (pallets, construction materials, etc.). These biomasses can be solid or liquid in nature.

Likewise, authors Dr Julio Berbel and Dr Carlos Gutiérrez from the University of Córdoba, together with Dr José Antonio La Cal from the University of Jaén in their study published in Researchgate entitled "Valorisation of the By-Products of the Olive Oil Chain" in volume 32 of 2018 indicate that: "The waste or by-products generated by the olive sector are usually biomass and can be divided into two main groups:
a. Those produced on the farm as a result of the olive pruning process, which is composed of leaves (25 % dry weight), fine branches (50 %) and wood of different thicknesses (25 %) (Manzanares et al., 2017). Only a small amount of pruning residues is used as fuel in power plants, as well as for thermal end uses in the form of wood chips. There has also been some experience of using this biomass for pellet production.
b. Those obtained in the industries of the sector after an agro-industrial process: oil mills and pomace oil extractors mainly. In the first mills (the oil mills), the fruit is cleaned to obtain flakes and small branches, fatty and wet pomace and untreated stones, i.e. extracted directly from the pomace stream. In the latter (the extractors), also called extraction factories, a by-product called dry pomace, wet pomace and extracted pomace or marc, among others, is generated".

Therefore, the fundamental differences are that agricultural waste originates in the field and its original chemical composition of the product it comes from (e.g. olive prunings and leaves), whereas an agro-industrial waste originates in an industry and has undergone a transformation process of the starting product it comes from, so its chemical composition varies from the original product it comes from (e.g. olive pomace, brine from olive pickling, etc.).

Specifically, unlike agricultural waste and by-products of the olive sector (pruning, branch remains, wood, etc.), agro-industrial olive residues and by-products are elements resulting from the olive oil production process, which can be both solid (stones, pulp and dry or wet pomace) and liquid (waste water and oil residues), and play a crucial role in the value chain of the olive industry. In addition, olive oil mill residues are characterised as phytotoxic and their direct release into the environment is not recommended (Akratos et al., 2017). Its proper management contributes to energy efficiency, circular economy, reducing environmental impacts, closing nutrient cycles, reducing dependence on non-renewable resources, promoting more sustainable agricultural and industrial practices, income diversification and improving corporate image. In short, they represent an environmental challenge and a strategic opportunity to strengthen sustainability and competitiveness in the olive industry within the framework of the circular bioeconomy.

B. Iron nanoparticles and HTC. Hydrothermal carbonisation (HTC) is a thermochemical process involving the thermal decomposition of organic matter in the presence of water and high temperatures, usually in the range of 180-300°C and at high pressures (usually autogenous). This process leads to the formation of carbonaceous coal-like products, known as hydrochar. This process was first described and investigated by Friedrich Bergius in 1913.

This process is carried out in autoclaves or specialised reactors to control the reaction conditions (temperature, pressure, agitation, acidity, corrosion...).

The products of hydrothermal carbonisation may vary depending on the raw materials used and the reaction conditions. However, they generally include a solid carbonaceous product (biochar or hydrothermal coal), organic liquids (water, organic acids, alcohols, etc.) and gases (carbon dioxide, methane, hydrogen, etc.).

Hydrothermal carbonisation is closely related to other carbonisation processes such as dry carbonisation and pyrolysis. However, the presence of water in hydrothermal carbonisation can have a significant impact on the final products and reaction kinetics.

Hydrothermal carbonisation is considered a relatively sustainable process as it can use a variety of renewable raw materials such as agricultural residues, sewage sludge, lignocellulosic biomass to produce useful carbonaceous products.

Specifically, authors such as Sun Hongqi et al., 2012 in their article entitled "Nano-Fe0 Encapsulated in Microcarbon Spheres: Synthesis, Characterisation, and Environmental Applications" used hydrothermal carbonisation to synthesise nanoscale zero-valent iron (ZVI) encapsulated in carbon spheres, all performed at laboratory scale using glucose and iron (III) nitrate as precursors. Furthermore, this study found that the efficiency of such nanoscale zero-valent iron encapsulated in carbon spheres was higher than that of ZVI particles, iron ions, iron oxides and cobalt oxide. This study lays the foundation for obtaining carbon-encapsulated zero-valent iron at the nanoscale.

Subsequently, Calderón et al., 2016 in their paper entitled "Synthesis of Carbon Encapsulated Iron Nanoparticles from Olive Mill Wastewater for Water Remediation" synthesised nanoscale zero-valent iron encapsulated in carbon spheres from olive mill wastewater as a carbon source, which had sizes between 100 and 200 nanometres (nm), compared to 2 nm in the case of using glucose, which prevents the rapid ageing of nZVI and prevents the contaminants from being re-delivered to the water. In addition, these carbon nanocapsules had a surface area of between 110 and 150 m2/g. While they mention that 99% iron incorporation into the nanocapsules was achieved instead of only 7% when glucose is used due to the polyolefin content, although this incorporation does not refer to the synthesis of zero-valent iron but to the total iron incorporated into the nanocapsules.

In a subsequent study, Bonaiti et al., 2017 in their paper entitled "Nitrogen activation of carbon-encapsulated zero-valent iron nanoparticles and influence of the activation temperature on heavy metals removal" activated nanoscale carbon-encapsulated zero-valent iron nanoparticles (CE-nZVI) with nitrogen to increase the content of metallic iron. The aim of this study was to test the efficiency of CE-nZVI post-treated with nitrogen (pyrolysis with N2) at different temperatures in the removal of heavy metals, showing that the influence of temperature was negligible on the removal efficiency.

Also, Calderón et al., 2018 in their paper entitled "Green Synthesis of Thin Shell Carbon-Encapsulated Iron Nanoparticles via Hydrothermal Carbonization" obtained again CE- nZVI from olive mill wastewater, although with larger surface area (up to 220 m2/g) and smaller size (approximately 4 nm) with thinner carbon coating (<1 nm) in relation to their 2016 study. Posttreatment of the samples under nitrogen flow at high temperatures (600-800 °C) was used to increase the ZVI content of the samples, similar to what was done in the study by Bonaiti et al., 2017.

All these studies were based on the ratio of moles of iron to moles of total organic carbon for the synthesis of nanoscale zero-valent iron encapsulated in carbon spheres, which is also reflected in chapter 6 of Calderón's 2017 thesis entitled "Application of iron-based nanostructures to contaminant remediation". Likewise, in subsequent related publications, this concept is reflected in the patent application filed by Mr Rubén Escudero Mira with application number 201900112 on 15/07/2019 and published by the SPTO on 21/01/2021, and in the patent application filed by the University of Alicante with application number 202030780 on 27/07/2020 and published by the SPTO on 03/03/2021.

In summary, hydrothermal carbonisation is a promising process for the valorisation of biomass and the production of carbonaceous products such as hydrochar and nanoscale zero-valent iron encapsulated in carbon spheres, among others, with various industrial and environmental applications. Its potential to convert biomass into useful products makes it an area of interest in the search for more sustainable and efficient technologies.

Zero-valent iron nanoparticles are used in a variety of environmental applications ranging from heavy metal ion removal to biogas production. One of the problems with this type of particles is that they tend to agglomerate, reducing their effectiveness. In addition, it has been shown that under certain conditions they can release the pollutants they have retained back into the environment. Current methods of producing zero-valent iron nanoparticles are costly and environmentally inefficient. As a result, their application on an industrial scale has not yet reached the market.

One solution to these problems of agglomeration and release of contaminants is the coating of nanoparticles with different materials to improve their dispersal into the environment without affecting their reactivity, such as carbon-based coatings.

There are different methods of producing zero-valent iron nanoparticles coated with a graphitised carbon layer. For example, patent US5472749A describes a method for the synthesis of metallic nanocrystals and alloys coated with a graphite layer using a process based on the generation of an electric arc. This method vaporises the material to be encapsulated by generating an electric arc between a tungsten cathode and a metal anode by placing a graphite crucible in the reaction chamber. This chamber is fed with an inert gas, which serves to conduct the formed nanoparticles to the collection chamber.

Patent US20080213189A1 describes a method of producing graphite-coated metals and alloys thereof by a chemical vapour deposition process. The process consists of vaporising the metal(s) adsorbed on silica, and bringing them into contact with a carbon-rich gas stream, which produces the coating of the metal particles. The silica is then removed by acid digestion.

These methods, based on carbon deposition at high temperature or using a large amount of electrical energy, while producing a high quality material, have a very high production cost which makes them unfeasible for environmental applications.

Patent US20130343996A1 describes a method for producing cobalt-iron core magnetic graphitised nanoparticles. In this case, the production method takes place in two stages: a first stage in which iron precursors are reacted with iron and cobalt with a dissolving carbohydrate at a temperature between 80-120°C for 8 hours, and a second one in which the resulting solid is filtered and treated with argon at temperatures between 500-600°C.

Although this production method has advantages over gas-phase carbon deposition, it requires long reaction times at low temperatures, which increases costs and makes it unfeasible for industrial production.

In addition, the liquid resulting from the reaction with the carbohydrate generates highly polluting residues due to its cobalt, iron and organic matter content.

The document: Niu H. et al. ACS Appl. Mater. Interfaces 2012, 4, 1, 286-295, refers to a process for obtaining graphitised iron nanoparticles from a starch or glucose solution, characterised by comprising a dispersion step of the above solution in 0.8 g of Fe3O4 nanoparticles, followed by a hydrothermal carbonisation at around 180°C for 4 hours, obtaining iron nanoparticles coated with amorphous carbon and followed by a gas phase graphitisation for 4 hours of the iron nanoparticles coated with amorphous carbon obtained in the previous stage and finally an isolation of the graphitised particles obtained. This process results in very low yields of zero-valent iron, only 5% Fe(0) by weight.

Document EP2383374A1 discloses a process for obtaining graphitised iron nanoparticles from a solution of glucose and an iron salt. In the process there is a hydrothermal carbonisation of the graphite precursor at 160-200°C and a gas phase graphitisation of the iron nanoparticles coated with amorphous carbon obtained between 450- 700°C and in an inert atmosphere.

Document EP3659725A1 discloses a process for obtaining graphitised iron nanoparticles from a mixture comprising a transition metal source and a polybasic organic carboxylic acid with a solvent to form a homogeneous solution, then removing the solvent from the homogeneous solution to obtain a precursor, and subjecting the precursor to pyrolysis at high temperature under an inert protective atmosphere or a reducing atmosphere.

In view of the above, the processes currently available in the literature for obtaining zero-valent iron particles have very high production costs, are industrially unfeasible because they have very low yields or produce a large amount of waste. There is therefore a need to provide a process for the production of such nanoparticles at low cost to enable their application in environmental processes.

C. Biogas production using only olive residues and/or by-products, as well as HTC as pre-treatment. There are several publications and research studies on the production of biogas from olive residues. All of them are in co-digestion with other substrates and most of them are laboratory batch tests, i.e. biomethanisation potential (BMP) in mesophilic range. Of all of them, it should be noted that:
- Azbar et al. (2008) observed that anaerobic digestion of alperujo monosubstrate shows very poor yields and that the addition of macro- and micronutrients deficient in alperujo (residue of crushed olives), such as ammonium as a source of nitrogen and pH buffer, is necessary to increase its biodegradability and the yield of the process. They used layer hen and cheese whey and observed 90% and 22% increases in the biodegradability of the alpechin (olive-mill wastewater), respectively.
- Varnero et al. (2014) found that the simple use of 5% methanogenic inoculant from bovine slurry produced biogas with more than 60% CH4 when using 27% of alperujo (two-phase olive mill waste carrying alpechin and marc) and 68% of horticultural waste, while without 5% inoculum the CH4 content was 13%.
- Tallou et al. (2020) tested different mixtures of alpechin (olive-mill wastewater) with domestic wastewater and cow dung.. Bioreactor 1 (B1) contained 50 % of alpechin (olive-mill wastewater (OMW)) and 50 % of domestic wastewater (DW), bioreactor 2 (B2) was filled with 33.33 % of each organic waste and bioreactor 3 (B3) was composed of 50 % of OMW and 50 % of cow dung (CD) in volume fraction. The bioreactors were operated similarly at the same time and conditions for 8 days. It was observed that they reached the maximum volume of biogas produced after 4 days and, after that, no biogas volume was produced (Yenigün and Demirel, 2013). The highest volume of biogas was produced by bioreactor 2 (476.69 mL CH4/g volatile solids) compared to bioreactor 1 (101.4 mL CH4/g volatile solids) and 3 (22.53 mL CH4/g volatile solids). This decrease may be due to the presence of ammonium in the process which limits the biological process of biogas production which is higher in B1 and B3 than in B2 (Fricke et al., 2007; Sawayama et al., 2004). However, although ammonium concentrations in all bioreactors are below inhibitory values, high or low salinity caused by adjusting the pH of the substrates to the optimal pH range (using acidic and basic solutions) could inhibit the anaerobic digestion process (Gagliano et al., 2017; Liu and Boone, 1991). In this study, the presence of phenolic compounds imported by OMW could be the cause of stopping biogas generation because the concentration is too high. The polyphenol concentration was 847 microg/mL in B1, 493 microg/mL in B2 and 926 mcrog/mL in B3. (Battista et al., 2014; Calabrò et al., 2018; Sokkanathan et al., 2018).
- By comparison, Gonçalves et al. (2012) used a hybrid digester, equipped with a packed bed of only 1/3 of its height, instead of a complete mix digester compared with the other studies. The study progressively uploaded the
digester with different mixtures of alperujo with pig slurry, from 8% to 83% of OMW, observing anaerobic degradation of polyphenols of between 50 and 60% in all cases, using hydraulic retention times of between 5 and 7 days. The methane content in the biogas decreased from 73-79% in period I to 59-66% in period VIII with increasing COD organic load. By contrast, a gradual improvement of biogas productivities is observed when a higher amount of waste fraction is used.

The following pre-treatments followed by anaerobic digestion have been applied to OMW, olive pomace and olive pomace residues:
- Dilution with water and addition of NaHCO3 and introduction to an upflow anaerobic sludge blanket (UASB) reactor;
- Removal of oil layer, dilution with water and addition of NaHCO3 and introduction to a UASB reactor;
- Pretreatment with fungi and addition of nutrients and introduction to an anaerobic filter;
- Addition of NaOH and introduction to an anaerobic filter;
- Dilution with water and addition of NaHCO3, K2HPO4 and urea and introduction to a hybrid anaerobic biological reactor;
- Dilution with water and addition of NaHCO3, NH4CI, (NH4)2HPO4 and micronutrients and introduction to a hybrid anaerobic biological reactor;

In summary, no studies, papers or patents can be found in the literature where:
**I.** biogas is produced from olive residues or olive by-products or a mixture of olive residues/by-products in semi-continuous or continuous feed to anaerobic digestion without inhibition;
II. hydrothermal carbonisation (HTC) is used as a pre-treatment of olive oil wastes and by-products (olive pomace, olive pomace residues, olive pomace wastewater, olive pomace, pulp, stones, etc.) to anaerobic digestion hydrothermal carbonisation (HTC);
III. hydrothermal carbonisation (HTC) is used as an efficient method of removing polyphenols from olive residues and by-products (two-phase olive mill waste, olive oil mill wastewater, mill waste water, fatty pomace, olive marc, stone, etc.);

Specifically, the invention that this patent proposes has developed a process in which hydrothermal carbonisation is used:
- to produce carbon-encapsulated iron nanoparticles from the alpechin (olive oil mill wastewater (OMW)), which have various environmental applications, including the improvement of the anaerobic digestion process (increases the degradation of polyphenols and phytotoxic compounds in the digester by 24%, avoids the formation of H2S by up to 99% with experiences of up to 10,000 ppm avoided and increases the methane production yield by up to 21%);
- to produce biogas from olive residues exclusively by removing at least 84% of the polyphenols upstream of the anaerobic digester;

### DESCRIPTION OF THE INVENTION

This procedure comprises the following stages, having two main phases consisting of a phase prior to the anaerobic digester and a subsequent phase consisting of the anaerobic digestion itself, both of which have different stages:

### I. Anaerobic digester pre-phase

1) reception and storage of the alerujo (two-phase olive mill wastewater) in a pond and/or impermeable tank;
2) introduction of the alperujo into an auger-type pulp-stone separator:
   a. cleaning and drying of the stone for subsequent sale or use as biofuel or animal feed;
   b. drying or not of the pulp depending on whether it is intended for composting or animal feed;
3. horizontal three-phase centrifugation (three-phase decanter) of the stoned alperujo, obtaining:
   a. olive pomace oil, which is stored under hygienic conditions and sold or refined for further sale;
   b. pomace, which can be sold for compost or dried until it has a moisture content of 10-15%, and can be separated into marc with part of the stone of the alperujo and dried pulp without the stone, which is sold as biofuel;
   c. acidic aqueous effluent rich in organic compounds such as hydroxytyrosol and tyrosol (both natural phenolic compounds with high antioxidant capacity), among others, which is stored in an impermeable tank or pond (depending on quantity and speed of processing) to decant the suspended solids by gravity, after which the effluent has two options:
      **I.** to be pulverised in a countercurrent gas separation tower until it reaches a moisture content of 60 to 80 %, it is then fed into an impermeable tank, passed through a 400 µm sieve, and then 0.1 µm ultrafiltration with ceramic filtration media is applied, resulting in a concentrated, filtered effluent which is stored in an sealed tank; such that the effluent contains between 8 and 110 g/L of total natural phenols, analysed by the Folin-Ciocalteu method, a pH of between 4 and 6 and between 12 and 50 degrees Brix; and/or
      II. be routed to step (4), such that the effluent contains between 2 and 40 g/L of total natural phenols, analysed by the Folin-Ciocalteu method, a pH of between 4 and 6 and between 3 and 20 degrees Brix;
4. hydrothermal carbonisation of acidic aqueous effluent rich in organic compounds by adding dissolved iron (either from the use of one or more iron salts and/or the dissolution of iron from scrap iron and/or the dissolution of iron from iron dust and/or iron chips):
   a. Next, there are 2 options, both equally valid, which consist of:
      **I.** directly introducing this concentrated and filtered effluent into an agitated hydrothermal carbonisation reactor together with dissolved iron in a ratio of between 0.01 and 1.15 kg of iron (Fe) for each kg of total phenols contained in this effluent (preferably 0.432 kg of Fe for each kg of total phenols) and a ratio of between 0.01 and 0.90 kg of Fe per kg of water, where water is understood as the moisture in the effluent together with the water that needs to be added to the process to meet this ratio (preferably 0.026 kg of Fe per kg of water), such mixture must be stirred for at least 20 minutes before reaching the set point temperature, which is between 205°C and 235°C (preferably 225°C), in the stirred hydrothermal carbonisation reactor for at least 15 minutes and not more than 210 minutes (preferably 90 minutes); or,
      II. introducing the concentrated and filtered effluent together with dissolved iron, and/or the desired iron salt in powder form, and/or a mixture of iron salts in powder form (prior to the hydrothermal carbonisation reactor) and/or iron solution from scrap iron and/or iron solution from iron dust and/or iron chips into a premix tank, based on the mass ratios of Fe and total phenols and Fe to water mentioned in subparagraph (4)(a)(i) above;
   b. heating of the hydrothermal carbonisation reactor to the set-point temperature, which is between 205°C and 235°C (preferably 225°C), in the stirred hydrothermal carbonisation reactor for at least 15 minutes and not more than 210 minutes (preferably 90 minutes), and once this internal set-point temperature is reached maintain the reactor under isothermal conditions with a maximum point swing of ± 5°C for the desired set-point time mentioned above;
   c. in stage 4 the stirred hydrothermal carbonisation reactor is filled to a maximum of 80% of its useful volume and a minimum of 15% to operate properly, in the case of filling it to 80% in the above-mentioned preferred conditions, the working pressure that it must be able to withstand is 120 bar; whereas, if it is filled to 15% it must withstand a working pressure of 45 bar and, in addition, such a reactor may be equipped with an automatic pressure relief valve, i.e. a back pressure valve, which allows the unwanted excess pressure to be released so that the process always occurs above 20 bar pressure;
   d. cooling of the stirred hydrothermal carbonisation reactor to 90°C or less at the reactor core temperature;
   e. relief of the internal pressure generated in the hydrothermal carbonisation reactor and emptying of the reactor, leading the product mixture (HYDRUJO) to an agitated tank, while the gases generated are introduced into the anaerobic digester or, failing that, into an air filter and/or a system for separation, purification and storage of these gases, since they are mainly CO2;

It should be noted that, in the hydrothermal carbonisation reactor, we manage to produce metallic hydrochar and/or metallic biochar in suspension, which contains carbon-encapsulated iron particles of nanometric size (CEINs), which present part of the carbon in the form of graphite layers and iron in different oxidation states, mainly reduced, so that it presents both Fe3+, Fe2+ and Fe0. It should also be noted, and this is of great importance for the invention, that unlike other research or methods, in this process the total phenol content of the filtered and concentrated effluent is thermochemically degraded between 50% and 95% (in the preferred conditions this degradation is 84%) due to the fact that it is these phenols that act as reducers of the iron, which is at the beginning of stage 4), is dissolved in its most oxidised state (Fe3+), so that the iron is reduced and nucleates mainly inside the carbon present in the medium and given mainly by the phenols and reducing organic compounds in the medium, i.e. the process could be said to consist of a series of RedOx reactions (reduction-oxidation) where the iron acts as an oxident that, given that it is the iron that oxidises the phenols, which in turn act as reducers as they act oxidise and reduce the disolved iron present in the medium.

Depending on the application, the HYDRUJO product may or may not be suitable, i.e. it could be carried out:
> filtration (with the filtered liquid being used for anaerobic digestion and/or as raw material for the formulation of agronomic products such as biostimulants, fertilisers, etc. and/or as biostimulant), drying of the solid (CEINs) and subsequent grinding in order to deagglomerate the CEINs and make the size distribution as homogeneous as possible and, furthermore, we can carry out a physical and/or chemical activation in the case of water treatment applications or without such activation for other applications such as agriculture, anaerobic digestion, dark fermentation and/or manufacture of new materials (electrodes, supercapacitors, textiles, concrete, asphalt, ceramics, paints, etc.) and/or;
> adjusting the desired concentration of CEINs in the mixture so that its dosage according to the application is most efficient, e.g. for anaerobic digestion it is recommended to use a dose of 2 g CEINs/kg of VS of the substrate;

Depending on the operating conditions, the chemical composition of CEINs can vary, especially in terms of iron and carbon content, which are the main compounds, so that we can obtain them from an iron content of 5% to 50%, and their content in zero-valent iron can vary from 0.5% to 5%. Using the preferred operating conditions, the liquid resulting from the filtration and the unactivated CEINs have the characteristics shown in Table 1:

**Table 1. Physico-chemical properties of CEINs and the liquid from its production.**

| PARAMETER | LIQUID | CEINs |
|---|---|---|
| Mean particle size (nm) | - | 350 |
| Total surface area (m^{2/}g) | - | 14.7 |
| External surface area (m^{2/}g) | - | 3.86 |
| Internal surface area (m^{2/}g) | - | 11.0 |
| Total pore volume (cc/g) | - | 0,070 |
| Micropore volume (cc/g) | - | 0.004 |
| % Carbon | - | 33.6 |
| % Iron | 0.06 | 34.1 |
| % Zero-valent iron | - | 2.5 |
| % THE: (g total humic extract/100 mL) | 6.45 | - |
| Polyphenols (mg Gallic Acid/100g) | 387.11 | - |
| % Dry matter | 13.08 | 91.53 |
| % Ash | 0.23 | 5.17 |
| % Organic matter | 8.44 | 56.53 |
| % N | 2.84 | 6.65 |
| % P | 0.00 | 1.71 |
| % K | 2.46 | 4.90 |
| % Ca | 0.00 | 1.70 |
| % Mg | 0.02 | 0.38 |
| ppm Cu | 0.00 | 3.50 |
| ppm Mn | 1.00 | 99.00 |
| ppm Zn | 5.50 | 91.50 |
| % Na | Do not sodify | Do not sodify |

### II. Anaerobic digestion

The next stage described below is anaerobic digestion, preferably of 1-stage under mesophilic conditions, preferably at 36°C, and with the digester stirred:
a. the agro-industrial olive residue, preferably stoned olive pomace from step 2) and prior to step 3), and the suspension of HYDRUJO are taken to the mixing tank, mixing them in such a way that the stoned olive pomace corresponds to between 30% and 50% by weight (preferably 40%) and the filtered liquid (from stage **I.** Phase prior to the anaerobic digester) between 50% and 70% by weight (preferably 60%) with a CEINs content corresponding to a dosage of between 1 and 5 g of CEINs/kg VS, preferably 2 g of CEINs/kg VS since at this dosage the nanoparticles catalyse the anaerobic degradation of the total phenols in the digester, increasing their degradation by 24%;
b. The mixture is then fed into the digester at an organic loading rate of 0.5 to 3 kg VS/(m3-d), preferably 1.8 kg VS/(m3-d);

For the start-up of the digester it is essential to start with a quality inoculum that is balanced in terms of nutrients and bacterial families, some examples include manure, WWTP sludge..., as well as starting with a low organic load start-up protocol, starting with 0.5 kg VS/(m3-d) and gradually increasing until the preferable organic loading rate is reached.

With all of the above, biogas can be produced exclusively from agro-industrial olive residue without inhibiting the process. Obtaining under the above-mentioned preferred conditions a yield of at least 300 m3N CH4/Tm VS, the composition of this biogas being at least 58.3% CH4, 34.2% CO2 and less than 50 ppm H2S.

This biogas is used in a cogeneration engine so that, on the one hand, the thermal energy is self-consumed to maintain the temperature of the anaerobic digester, the drying operations and the heating of the hydrothermal carbonisation reactor and, on the other hand, the electrical energy is self-consumed and, in the event of a surplus, the surplus is sold to the electricity grid. There is also the option of upgrading this biogas to produce biomethane, if this option is more profitable and there is sufficient investment capacity.

In addition, the digestate has the characteristics shown in Table 2:

**Table 2. Characteristics of the resulting digestate.**

| Element (ppm) | Digestate |
|---|---|
| Ca | 746 |
| Fe | 351 |
| K | 12.559 |
| Mg | 337 |
| Na | 365 |
| P | 343 |
| Al | 46 |
| Mn | 11 |
| Zn | 30 |
| Cu | 14 |
| Cr | 5 |
| Ni | <5 |
| C/N | 12 |
| Total nitrogen (%) | 0.30 |
| Available nitrogen (%) | 0.17 |
| Total P2O5(%) | 0.08 |
| Available P2O5 (%) | 0.05 |
| Total K2O (%) | 1.53 |
| Available K2O (%) | 1.41 |
| Polyphenols (%) | 1.45 |

Thus, as shown in Table 2, the digestate obtained is considered as classification A in terms of its heavy metal content and complies with current legislation in terms of the C/N ratio < 20; therefore, it could be considered as an organic amendment, and in order to apply it, it would have to be mixed to lower the % in polyphenols from 1.45% to at least 0.8%, i.e. it would have to be mixed with another polyphenol-poor amendment that complies with RD 999/2017. In addition, this amendment must be chosen according to its N, C/N ratio, P and K content in order to provide the necessary nutritional requirements for the plant or crop to which the mixture is applied.

The digestate is then stored in an impermeable tank for subsequent sale as an organic amendment.

It is worth mentioning that the stage **I.** Phase prior to the anaerobic digester can be used as pre- treatment of anaerobic digestion for agro-industrial olive residues and/or by-products in order to reduce the phenol content, i.e. as a pre-treatment for the elimination of phenols for agro-industrial olive residues and/or by-products.

In summary, in order to achieve biogas production exclusively from agro-industrial olive residue, the following is essential:
A. the pre-digester stage, as part of the substrate is pre-treated and adapted, eliminating 84% of total phenols in the preferred conditions, and CEINs are produced;
B. the mixing ratio of treated and untreated substrate;
C. apply a dose of CEINs to increase the degradation of the total phenols in the digester, being 24% at the dose of 2 g CEINs/kg VS;
D. organic loading rate and start-up protocol;

### DESCRIPTION OF THE DRAWINGS

To complement the description being made and in order to facilitate a better and easier understanding of the characteristics of the invention and its practical applications, a series of figures of the CEINs that can be obtained, as well as the process diagram, are attached to this descriptive report as an integral part of the same.

Figures and/or Diagrams of the invention:
Figure 1. Flow diagram of the invention
Figure 2. FESEM image of the CEINs at 5 micron scale made by SAIUEx.
Figure 3. FESEM image of the CEINs at 5 micron scale made by SAIUEx.
Figure 4. FESEM image of the CEINs at 5 micron scale made by SAIUEx.
Figure 5. FESEM image of CEINs at 100 nanometre scale made by SAIT-UPCT.
Figure 6. FESEM image of CEINs at 300 nanometre scale by SAIT-UPCT
Figure 7. FESEM image of CEINs at 100 nanometre scale by SAIT-UPCT
Figure 8. FESEM image of CEINs at 100 nanometre scale by SAIT-UPCT

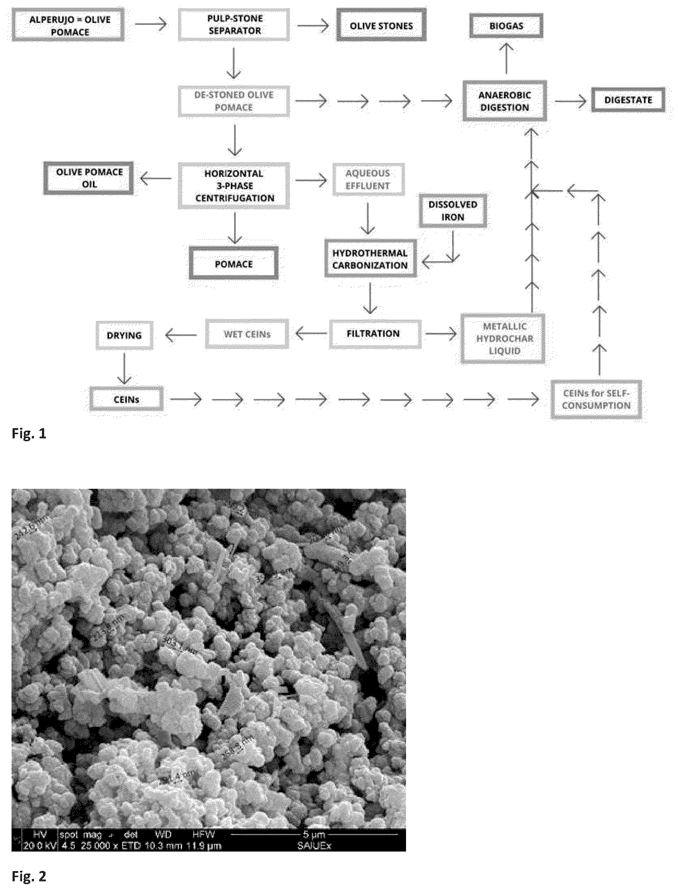

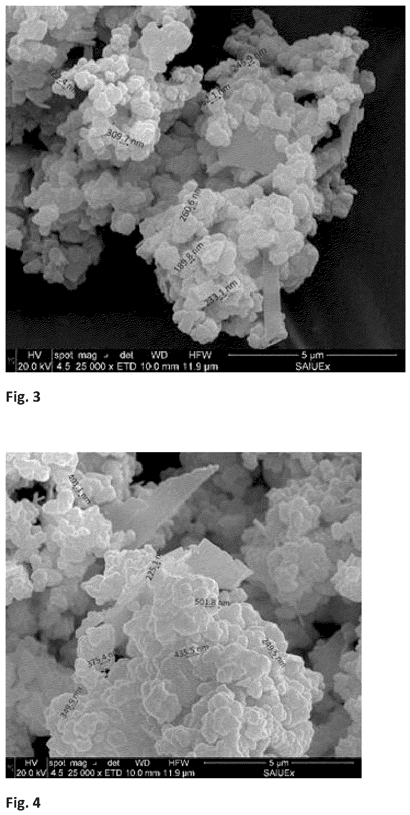

Figure 1 shows the flow diagram of the invention while figures 2, 3 and 4 show SEM (Scanning Electron Microscopy) images of the CEINs with different scale magnifications made by SAIUEx (Research Support Services of the University of Extremadura) without applying a previous treatment to disperse them as they agglomerate, where the nanometric size of the CEINs can be verified, as well as their heterogeneity in size, as well as the fact that they present some structures corresponding to impurities in the sample due to the fact that they are produced from an olive residue and/or by-product such as alperujo (olive pomace).

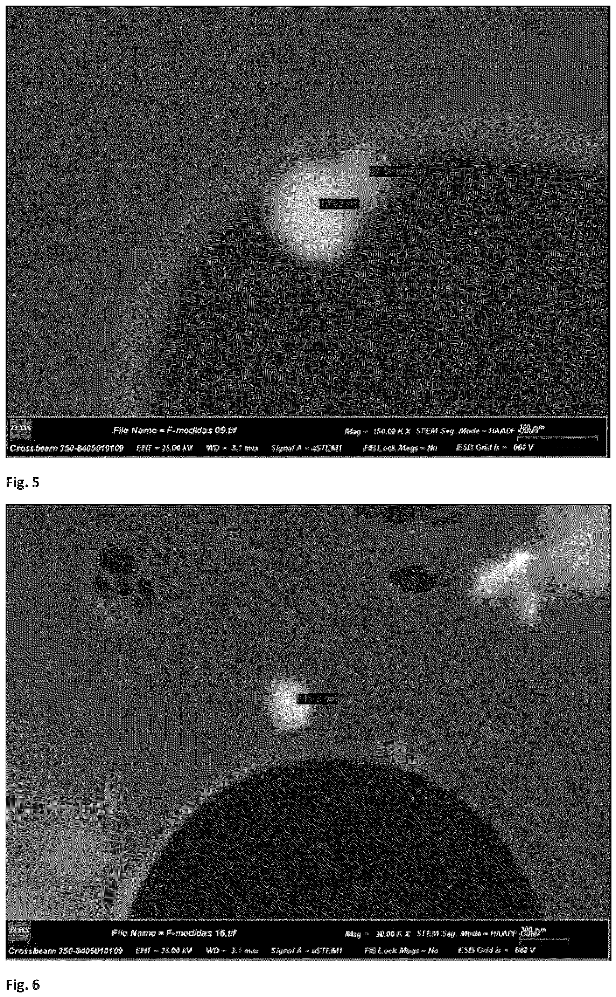

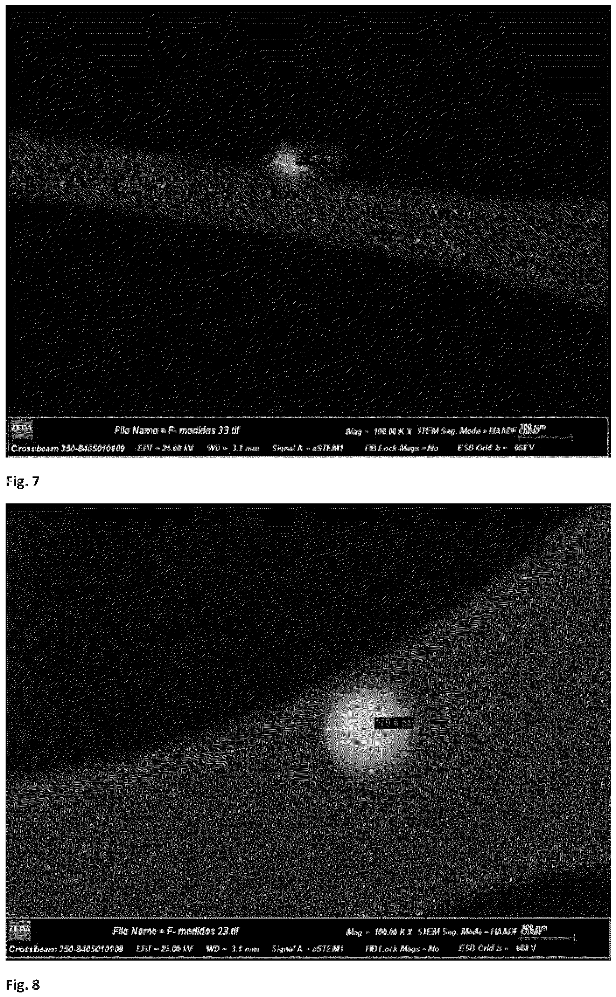

Figures 5, 6, 7 and 8 show STEM (Scanning Transmission Electron Microscopy) images made by the SAIT-UPCT (Support Services for Technological Research of the Polytechnic University of Cartagena) of the CEINs by applying a previous dispersion treatment, where the nanometric size of the CEINs can be verified, as well as their heterogeneity in size, due to the fact that they are produced from an olive residue and/or by-product such as olive pomace.

Thus, it can be seen that the majority of particles obtained are around 350 nm, with some of the order of 50 nm (specifically 67.45 nm) and a minority of the order of 1 micron, so that the average size of the coarse is 350 nm.

### PREFERRED IMPLEMENTATION OF THE INVENTION

The invention focuses on an innovátive process that allows the managément and valorisation of agro-industrial olive residues and by-products, promoting a zero-waste approach within the framework of the circular bioeconomy. This process is divided into two main phases: the anaerobic pre-digester phase and the anaerobic digestion phase.

### I. Anaerobic Digester Pre-Phase

1. Reception and Storage: It starts with the reception of the pomace in a impermeable tank.
2. Separation of Components: The pomace is fed into a pulp-stone separator, where the stones are cleaned and dried for subsequent use as biofuel or animal feed.
3. Centrifugation: A horizontal three-phase centrifugation is carried out, obtaining olive pomace oil, pomace and an acidic aqueous effluent rich in organic compounds.
4. Hydrothermal carbonisation: The aqueous effluent is subjected to hydrothermal carbonisation by adding dissolved iron. This process generates:
   - Metallic hydrochar and/or metallic biochar in suspension, containing iron nanoparticles encapsulated in carbon (CEINs).
   - A nutrient-rich liquid that can be used in the agricultural industry or for biogas production.
   - Gases mainly composed of CO2, which can be used in various industries.

### II. Anaerobic Digestion

In this phase, the olive residue (preferably stoned olive pomace) is mixed with the HYDRUJO suspension (resulting from carbonisation) in an anaerobic digester. An optimum mixing ratio is sought, where the waste fraction is between 30% and 50% of the total.
- Biogas Production: During anaerobic digestion, the mixture of alperujo and HYDRUJO suspension decomposes, generating biogas. This biogas is mainly composed of methane (CH4) and carbon dioxide (CO2), and can be used as a renewable energy source, contributing to the sustainability of the process.
- Digestate: At the end of the digestion process, a digestate is obtained, which is a nutrient-rich by-product. This digestate can be used as an organic fertiliser in agriculture, thus closing the valorisation cycle of olive residues.

### Results of the Process

1. Waste Reduction: This process contributes significantly to the reduction of waste generated by the olive oil industry, promoting a zero-waste approach.
2. Renewable Energy Production: Biogas generation allows waste to be used to produce energy, reducing dependence on fossil fuels.
3. Soil Improvement: The use of digestate as an organic fertiliser improves soil quality and promotes sustainable agricultural practices.
4. Contribution to the Circular Bioeconomy: This approach not only maximises the value of olive by-products, but also promotes a more sustainable and environmentally friendly production model.

The preferred embodiment of this invention represents a significant advance in the management of olive residues, offering a comprehensive solution that benefits both the industry and the environment. By implementing this process, greater efficiency in the use of resources and a reduction in the environmental impact associated with olive oil production can be achieved.

## Claims

1. Process for the management and valorisation of waste and/or zero-waste agro-industrial olive by-products in the framework of the circular bio-economy, **characterised by** the following stages and sub-stages:
a. Pretreatment or phase prior to the anaerobic digester, which is divided into the following substeps:
1) reception and storage of waste and/or by-products (alperujo or alpechin) in a pond and/or impermeable tank;
2) introduction of the liquid or pasty waste and/or by-products into an auger-type separator, thus separating the solid biomass (olive stones) from the liquid or pasty biomass (alpechin (OMW/pomace) or alperujo (stoned OMW/pomace);
3) horizontal 3-phase centrifugation (3-phase decanter) of the residues and/or by-products without the larger solids (obtained in the previous sub-stage), obtaining pomace oil, an acidic aqueous effluent rich in organic compounds (such as sugars and phenols like tyrosol and hydroxytyrosol, among other compounds) and pomace;
4) hydrothermal carbonisation of the acidic aqueous effluent rich in organic compounds by adding dissolved iron, obtaining, on the one hand, a metallic hydrochar and/or metallic biochar in suspension, containing iron nanoparticles encapsulated in carbon (CEINs), which present part of the carbon in the form of graphite layers and iron in different states of oxidation, mainly reduced, so that it presents both Fe3+, Fe2+ and Fe0, and, on the other hand, gases composed mainly of CO2 that can be used as a raw material in the chemical or pharmacological industries, in greenhouses or for biogas production;
5) Adaptation of the hydrochar obtained by applying a solid-liquid separation, either by means of a filter press or an electromagnetic filter, obtaining, on the one hand, a wet solid consisting of CEINs and, on the other hand, a nutrient-rich liquid fraction consisting of metallic hydrochar without CEINs which can be used in the agricultural industry or for biogas production;
6) drying of the CEINs by spray drying, oven or solar drying;
b. anaerobic digestion, consisting of a biogas production process; and
exclusively from olive residues and/or by-products, by mixing part of the waste and/or by-products after removal of the coarse solids and part of the liquid fraction of the filtered hydrochar at a ratio of 25% to 75% by weight, using an organic loading rate of between 0.5 and 3 kg VS/(m3-d) and a CEINs dosage of between 1 and 5 g/kg VS, resulting in a methane production yield of between 200 and 600 m3 normal methane per tonne of volatile solids.

2. Process for the management and valorisation of zero-waste agro-industrial olive oil waste and/or by-products within the framework of the circular bioeconomy according to the first claim, **characterised in that** the hydrothermal carbonisation treats the acidic aqueous effluent rich in organic compounds (such as sugars and phenols such as tyrosol and hydroxytyrosol, among other compounds), either as it leaves the 3-phase decanter or a concentration and/or subsequent ultrafiltration is applied, together with dissolved iron in a proportion of between 0.01 to 1.15 kg of iron (Fe) per kg of total phenols contained in this effluent and a ratio of 0.01 to 0.90 kg of Fe per kg of water, water being understood as the moisture of the effluent together with the water that may be necessary to add to the process to meet this ratio, this mixture must be stirred for at least 20 minutes before reaching the set temperature, which is between 205°C and 235°C, in the stirred reactor of hydrothermal carbonisation for at least 15 minutes and no more than 210 minutes.

3. Process for the management and valorisation of zero-waste agro-industrial olive oil waste and/or by-products within the framework of the circular bioeconomy according to the first and second claims, **characterised in that** the effluent is introduced into a premixed tank to the hydrothermal carbonisation reactor together with dissolved iron, and/or the desired iron salt in powder form, and/or a mixture of iron salts in powder form (prior to the hydrothermal carbonisation reactor) based on the mass ratios of Fe and total phenols and Fe and water mentioned in claim 2.

4. Process for the management and valorisation of zero-waste agro-industrial olive oil waste and/or by-products within the framework of the circular bioeconomy according to the above claims, **characterised in that** dissolved scrap iron, dissolved iron powder, dissolved iron ore, dissolved iron scale, dissolved iron shavings, a dissolved iron salt, a mixture of dissolved iron salts and/or a mixture of the above mentioned sources of iron are used as a source of iron.

5. Process for the management and valorisation of zero-waste agro-industrial olive oil waste and/or by-products within the framework of the circular bioeconomy according to the above claims, in which the olive oil waste and/or by-product is alperujo (2nd-phase pomace) or wet fatty pomace and/or alpechin (OMW).

6. Process for the management and valorisation of zero-waste agro-industrial olive oil waste and/or by-products within the framework of the circular bioeconomy according to the above claims, in which between 50% and 95% of the total phenol content of the acidic aqueous effluent rich in organic compounds, such as sugars and phenols like tyrosol and hydroxytyrosol, among other compounds, is eliminated, mainly thanks to the described process of hydrothermal carbonisation.

7. Process for the management and valorisation of waste and/or zero-waste Agro-industrial zero-waste products framed in the circular bioeconomy according to the above claims, wherein a metallic hydrochar and/or metallic biochar in suspension is produced, containing carbon-encapsulated iron nanoparticles (CEINs), which have an average size between 20 and 800 nanometres, a surface area between 10 and 200 m2/g, are mainly mesoporous and present part of the carbon in the form of graphite layers and the iron in different oxidation states, mainly reduced, so that it presents both Fe3+, Fe2+ and Fe0.

8. Process for the management and valorisation of waste and/or zero-waste Agro-industrial zero-waste products framed in the circular bioeconomy according to the previous claims, in which carbon-encapsulated nanoparticles (CEINs) are produced, which have an average size between 20 and 800 nanometres, a surface area of between 10 and 200 m2/g, are mainly mesoporous and present part of the carbon in the form of graphite layers and the iron in different states of oxidation, mainly reduced, so that it presents both Fe3+, Fe2+ and Fe0;

9. Process for the management and valorisation of waste and/or zero-waste Agro-industrial zero-waste plants within the framework of the circular bioeconomy according to the above claims, in which a nutrient-rich liquid consisting of CEINs-free metallic hydrochar is produced which can be used in the agricultural industry or for biogas production.

10. Process for the management and valorisation of waste and/or zero-waste Zero waste agro-industrial plants framed in the circular bioeconomy according to the above claims, in which biogas is produced exclusively from olive residues and/or by-products, mixing part of the residues and/or by-products after having removed the coarse solids and part of the liquid fraction of the filtered hydrochar in a proportion of between 25% and 75% by weight, using an organic loading rate of between 0.5 and 3 kg VS/(m3-d) and a dose of CEINs of between 1 and 5 g / kg VS, obtaining at least 58% methane richness in the biogas, less than 100 ppm H2S and a digestate with potential agronomic use.

11. A nanomaterial obtained by the process according to the preceding claims, which consists of a heterogeneous set of iron particles in different oxidation states (Fe3+, Fe2+ and Fe0) wrapped in a carbon matrix, which presents both amorphous carbon and graphite layers, which has the following physico-chemical characteristics:
a. a chemical composition of mostly carbon (C), iron (Fe), potassium (K) and phosphorus (P) which, depending on how the production process (claim 1) is carried out, may vary:
**I.** from 45% to 32% total carbon;
II. from 11% to 38% total iron;
III. from 22% to 9% total potassium;
IV. from 1% to 4% total phosphorus;
b. The above chemical composition ratios vary as described above, i.e. the higher the iron content, the lower the content of the other elements (carbon, potassium and phosphorus) and vice versa;
c. Heterogeneity in particle size, with nanoparticles ranging from 20 nanometres (nm) to 800 nm, with the average size ranging from 150 nm to 350 nm depending on how the production process is carried out (claim 1);
d. Surface area from 10 m2/g to 200 m2/g depending on how the production process is carried out (claim 1);
e. is a mainly mesoporous nanomaterial with a pore volume ranging from 0.006 cm3/g to 0.1 cm3/g depending on how the production process is carried out (claim 1);
f. semi-conductor character;
g. magnetic character;
h. tendency to agglomerate between particles, although they are easily suspended in water;

12. A nutrient-rich liquid obtained by the process according to claims consisting of metallic hydrochar, the physico-chemical properties of which may vary depending on how the process set out in claim 1 is carried out:
a. pH from 5,5 to 8,8;
b. a total humic extract content from 2% to 10%;
c. a total polyphenol content from 1 000 mg/L to 20 000 mg/L;
d. a total iron content from 50 mg/L up to 200 mg/L;
e. a potassium content from 1% to 10%;
